# EUROPÄISCHE PATENTSCHRIFT

(11) **EP 2 451 629 B1**
(45) Veröffentlichungstag und Bekanntmachung des Hinweises auf die Patenterteilung: **20.06.2018**
(21) Anmeldenummer: 10732340.4
(22) Anmeldetag: 06.07.2010
(51) Int. Cl.: B29C 65/08, B60R 19/48

(54) **ANBAUTEIL ZUR VERBINDUNG MIT EINEM BAUTEIL DURCH TORSIONALES ULTRASCHALLSCHWEISSEN**
ADD-ON PIECE FOR BONDING WITH A PART BY TORSIONAL ULTRASONIC WELDING
COMPOSANT A JOINDRE A UNE PIECE PAR SOUDURE ULTRASONIQUE EN TORSION

(30) Priorität: 06.07.2009 DE 102009031984; 22.12.2009 DE 102009060444
(43) Veröffentlichungstag der Anmeldung: 16.05.2012
(73) Patentinhaber: Faurecia Exteriors GmbH, 31655 Stadthagen (DE)
(72) Erfinder: BÜCKER, Dirk, 41199 Mönchengladbach (DE); GÖRSE, Hergen, 91154 Roth (DE); SAUTNER, Anton, 91757 Treuchtlingen (DE); ORTNER, Florian, 91781 Weißenburg (DE)
(74) Vertreter: Andrieux, Benoît
(86) Internationale Anmeldenummer: PCT/EP2010/059611
(87) Internationale Veröffentlichungsnummer: WO 2011/003891

(56) Entgegenhaltungen:
- EP-A1- 1 410 988
- WO-A1-2006/128246
- WO-A1-2010/100225
- DE-A1- 19 758 075
- GB-A- 2 116 667
- JP-A- H04 201 236
- US-A1- 2005 028 492
- US-A1- 2005 104 389

## Beschreibung

Die Erfindung betrifft ein Verfahren zum Verschweißen eines Anbauteils mit einem Bauteil, insbesondere für ein Kraftfahrzeug, mit dem an sich bekannten torsionalen Ultraschallschweißverfahren mit einer Sonotrode zur Übertragung der den Schweißvorgang erzeugenden Schwingungen auf das zu verschweißende Anbauteil, wobei das Anbauteil mit einer Ankopplungsfläche zur Ankopplung der Schwingungen der Sonotrode versehen wird und das Anbauteil auf dem zur Schweißfläche auf dem Bauteil gewandten Schweißbereich mit Kopplungselementen zur Ankopplung der von der Sonotrode induzierten Schwingungen versehen wird und dadurch beim Schweißvorgang die Kopplungselemente schmelzen und so das Anbauteil mit dem Bauteil verschweißen. Außerdem werden Anbauteile zur Verwendung mit diesem Verfahren vorgeschlagen.

Eine etablierte Technik zum Verbinden von Bauteilen aus Kunststoff ist das Schweißen. Hierzu werden diverse Möglichkeiten zur Energieeinbringung genutzt. Zum Beispiel Reibschweißen oder Ultraschallschweißen.

Speziell bei der Anwendung im automobilen Außenbereich liegen, aufgrund der Möglichkeiten, die die neuen Materialeigenschaften beim Spritzgießen bieten, die zurzeit gängigen Wandstärken bei der Verarbeitung im Bereich von >= 3,0 mm. Die hierbei standardmäßig zum Einsatz kommende Materialart ist, aufgrund des Preises, mit Talkum verstärktes PP.

Aufgrund der dünnen Wandstärke sinken Kosten und Gewicht des Bauteils. Da jedoch speziell PP gegenüber anderen technischen Kunststoffen unter Last sehr kriechfähig ist und über ein geringes E-Modul verfügt, gleichzeitig aber die an die Bauteilverschweißung gestellten Forderungen von Haltekräften an den geschweißten Bauteilverbund von > 200N je Schweißstelle unverändert bleiben, ist es oft nicht möglich die Bauteile so zu verbinden, dass die optisch relevante Oberfläche fehlerfrei bleibt. Hierbei behindern zwei Einflussfaktoren eine abzeichnungsfreie Verschweißung:

### 1.) Prozessbedingte Fehlstellen

Die eingebrachte Energie zur Aufschmelzung und innigen Verbindung der Trennebene wirkt sich durch das Bauteil hindurch derart aus, das die Oberfläche in Folge des Schwindungsunterschieds beim Abkühlen des Bauteils deformiert und eine Fehlstelle ausbildet.

### 2.) Lastbedingte Fehlstellen

Die beim Schweißen punktartig in den Bauteilverbund eingebrachten Kräfte führen an der Oberfläche, bei zu geringer Bauteildicke und E-Modul der Oberfläche, zu sichtbaren Deformationen. Die Oberfläche gibt unter der Last der eingebrachten Spannungen nach und bildet eine sichtbare Fehlstelle aus.

Eine Entwicklung um diesen Effekt zu verhindern, ist das torsionale Ultraschallschweißen, wie es in der EP 1 930 148 A1 und der noch unveröffentlichten DE 10 2009 01 1273 A1 beschrieben ist. Dabei wird das unter der Sonotrode liegende obere Bauteil in rotatorische Schwingung im Frequenzbereich des Ultraschalls versetzt. Die Schwingung wird durch das obere Bauteil weitergegeben und direkt in der Trennebene zwischen oberen und unteren Bauteil in Wärme umgesetzt. Das obere Bauteil wird zwar durch seine innere Dämpfung erwärmt aber nicht aufgeschmolzen. Hierdurch reduziert sich zum einen die auf das untere Bauteil wirkende Hitze, zum anderen wird die wirksame Verbindungsfläche zur Krafteinleitung von punktartig in eine linien und/oder flächenartige Verbindung gewandelt. Als Resultat sind abzeichnungsfreie Verbindungen bei polyolefinen Werkstoffen auch unter 3,0 mm Wanddicke möglich. Die Entstehung von Fehlstellen konnte so verhindert werden.

In dieser Beschreibung bezeichnen die Begriffe oberes Bauteil und Anbauteil sowie unteres Bauteil und Bauteil die gleichen Gegenstände. Auf das Anbauteil bzw. auf das obere Bauteil wird die Sonotrode aufgesetzt, um das unter dem Anbauteil sich befindliche Bauteil mit dem Anbauteil zu verschweißen.

Die als torsionales Schweißen bekannte Ultraschallschweißtechnik bedarf eines hohen Anpressdrucks. Speziell im Fall einer leichten Verschmutzung der Oberfläche durch vorangegangene Arbeitsschritte wird die benötigte Temperatur des Schweißgutes oft nicht erreicht, sondern dieses deformiert und eine innige Verbindung verhindert. Außerdem wird das verflüssigte Material durch den hohen Anpressdruck aus dem Bereich der Schweißstelle gedrückt. Eine kalte Schweißstelle mit schlechter Haftung ist das Resultat.

Die EP 1410988A1 beschreibt ein Verfahren zum Verschließen eines Behälters mittels Ultraschallwellen.
Die US 2005/0028492A1 befasst sich mit einem Verfahren zur Herstellung eines Tonerbehälters und einem Tonerbehälter.

Die WO 2006/128246A1 betrifft einen verschließbaren Behälter, und ein Verfahren zum Verschließen eines Behälters.
Die GB 2116667A beschreibt Fluiddruckvorrichtungen mit flexiblen Arbeitsteilen.
Die DE 19758075A1 betrifft Sensoraufnahmehülsen für Stoßfänger.
Die US 2005/0104389A1 beschreibt ein Verfahren zum Fügen zweier Bauteile eines Kraftfahrzeuges.
Die JP H04201236A offenbart ein Verfahren zum Verbinden zweier Kunststoffteile mittels torsionalem Ultraschallschweißen.
Der Erfindung liegt die Aufgabe zugrunde, ein Verfahren nach dem Anspruch 1 anzugeben, mit dem die Menge und Verweildauer der Schmelze während des Schweißvorgangs an der Schweißfläche erhöht wird und dadurch lokal die benötigte Schmelzetemperatur und Einwirkdauer zur Erzeugung der benötigten Verbindungsqualität erreicht wird. Außerdem sollen Anbauteile angegeben werden, die durch geeignete konstruktive Maßnahmen an ihrem Schweißbereich das innige Verschweißen ermöglichen. Außerdem soll eine Verschweißung auch bei leichten Verschmutzungen möglich sein.
Erfindungsgemäß wird die Aufgabe bezüglich des Verfahrens dadurch gelöst, dass als Kopplungselemente sich im Wesentlichen senkrecht zum ringförmigen Schweißbereich erstreckende Auskragungen verwendet werden, die so angeordnet werden, dass die Schmelze im Wesentlichen auf der Schweißfläche bleibt. Die Auskragungen sind zwei koaxial angeordnete Ringe, die den ringförmigen Schweißbereich eingrenzen. Wie in Versuchen gezeigt wurde, ist ein Verschweißen von zwei Bauteilen in dem Moment gewährleistet, in dem sowohl der benötigte Anpressdruck zur Einkopplung des Ultraschalls gewährleistet wird, als auch verhindert wird, dass die Schmelze aus der Schweißfläche direkt weggedrückt wird. Die Auskragungen werden daher so angeordnet, dass ein Wegdrücken der Schmelze vermindert oder verhindert wird.

In einer Weiterbildung der Erfindung wird die Schmelze unter benachbarte Auskragungen gelenkt oder es werden zwei parallel entstehende Schmelzeflüsse gegeneinander gelenkt. Es kann auch ein entstehender Schmelzefluss gezielt unter benachbarte Auskragungen geleitet werden, die noch schmelzen werden. In diesem Fall spricht man von einer Opfer-Auskragung. Wenn zwei parallel entstehende Schmelzeflüsse gegeneinander gelenkt werden, bildet sich ein Reservoir an Schmelze.

Nachfolgend werden erfindungsgemäße Anbauteile beschrieben, die durch geeignete konstruktive Maßnahmen an ihrem Schweißbereich das innige Verschweißen ermöglichen.

Beschrieben werden Anbauteile mit zumindest einem für eine Verschweißung mit einem Bauteil vorgesehenen ringförmigen Schweißbereich, wobei die Verschweißung mit dem an sich bekannten torsionalen Ultraschallschweißverfahren erfolgen soll mit einer Sonotrode zur Übertragung der den Schweißvorgang erzeugenden Schwingungen auf das zu verschweißende Anbauteil, wobei das Anbauteil eine Ankopplungsfläche zur Ankopplung der Schwingungen der Sonotrode aufweist und das Anbauteil auf seinem zur vorgesehenen Schweißfläche auf dem Bauteil gewandten Schweißbereich mit Kopplungselementen zur Ankopplung der von der Sonotrode induzierten Schwingungen versehen ist, die beim Schweißvorgang schmelzen und so das Anbauteil mit dem Bauteil verschweißen.

Erfindungsgemäß sind die Kopplungselemente im Wesentlichen senkrecht zum Schweißbereich sich erstreckende Auskragungen, nämlich zwei koaxial angeordnete Ringe, die den ringförmigen Schweißbereich eingrenzen. Die Schmelze, die sich innerhalb der koaxial angeordneten Ringe befindet, kann aufgrund der Ringe aus dem Schweißbereich nicht weggedrückt werden.

In einer erfinderischen Ausgestaltung sind die Auskragungen Rippen oder Noppen.

In einer Ausführungsform bilden die Auskragungen eine erhabene Kette mit Unterbrechungen. Diese erhabene Kette mit Unterbrechungen kann so auf dem Schweißbereich angeordnet werden, dass der Schmelzefluss im Bereich der Schweißfläche bleibt und nicht weggedrückt wird.

Ergänzend zu dem eben Beschriebenen kann die Geometrie der Auskragungen bzw. der jeweiligen Rippengeometrie radial am Durchmesser unterbrochen werden um zum einen Platz für das Schweißgut zu schaffen und zum anderen eine Art Sägeeffekt für das Durchdringen möglicher Verschmutzungen bzw. das leichte "Eingraben" in die eigentliche Bauteiloberfläche zu verbessern. Dies ist bevorzugt anzuwenden bei Auskragungen, die einen Ring bilden und den Schweißbereich umgeben.

Zur Lenkung des Schmelzeflusses können die Auskragungen im Querschnitt dreieckförmig, M-förmig, keilförmig, trapezförmig oder wellenförmig ausgebildet sein.

Nachfolgend wird die Erfindung unter anderem anhand von Figuren näher erläutert.

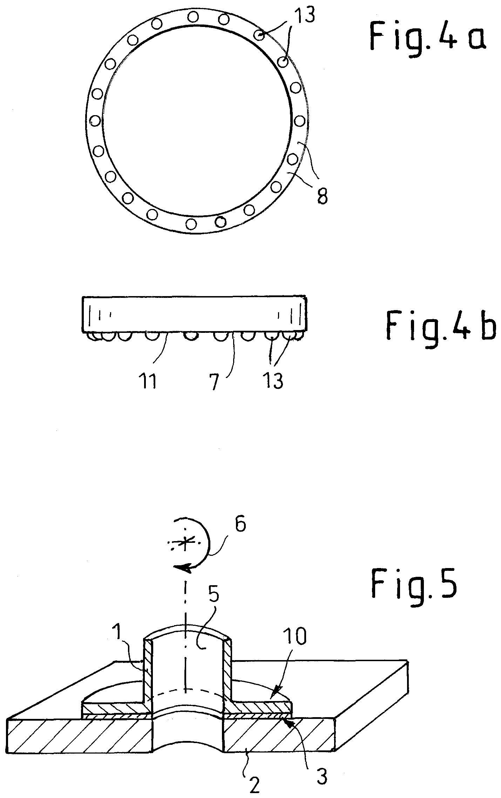

Beim torsionalen Ultraschallschweißverfahren (siehe Figur 5) wird eine Sonotrode (in den Figuren nicht gezeigt) zur Übertragung der den Schweißvorgang erzeugenden Schwingungen verwendet, die auf das zu verschweißende Anbauteil 1 auf die Ankopplungsfläche 10 aufgesetzt wird. Das zu verschweißende Anbauteil 1 wird in dieser Beschreibung auch als oberes Teil bezeichnet und das Bauteil 2 mit dem das Anbauteil 1 verschweißt werden soll, wird auch als unteres Teil bezeichnet. Beim Schweißvorgang werden die Schwingungen der Sonotrode auf die Schweißfläche 3 übertragen und verschweißen so das Anbauteil 1 mit dem Bauteil 2. Sowohl das Anbauteil 1 als auch das Bauteil sind Kunststoffteile. Das Anbauteil 1 ist in allen hier gezeigten Figuren ein Halter, der an einen Stoßfänger als Bauteil 2 angeschweißt wird. Der Halter dient zur Aufnahme eines Ultraschallparksensors (nicht gezeigt). Das Anbauteil 1 weist hierzu eine Bohrung 5 zur Aufnahme des Ultraschallparksensors auf. Mit dem Pfeil 6 in Figur 5 sind die Schwingungen angedeutet, die von der Sonotrode beim Schweißvorgang erzeugt werden.

Bevorzugt werden das erfindungsgemäße Verfahren und die Anbauteile 1 im Automotivbereich verwendet und dort bevorzugt an Außen- oder Innenteilen aus Kunststoff. Eine bevorzugte Anwendungsform ist das Anschweißen von Anbauteilen 1 an sichtbare Außenteile des Kraftfahrzeugs. Zum Beispiel können mit diesem Verfahren Anbauteile 1 an zum Beispiel einen Stoßfänger oder einen Radkasten angeschweißt werden.

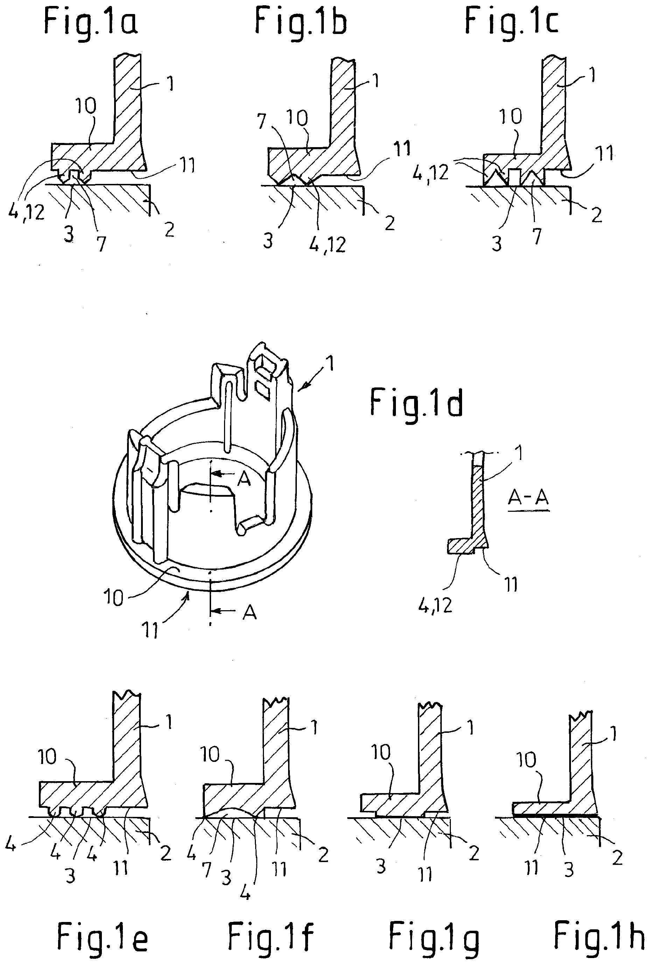

Die Anbauteile 1 bzw. oberen Teile, werden erfindungsgemäß schon bei der Herstellung so ausgebildet, dass sie problemlos mit dem erfindungsgemäßen Verfahren an Bauteile 2, bzw. untere Teile angeschweißt werden können. Da diese Anpassung der oberen Teile sichtbar ist, kann beurteilt werden, ob diese für die Anwendung des erfindungsgemäßen Verfahrens vorbereitet wurden. Die in den Figuren 1d und 1g dargestellten Gegenstände sind nicht erfindungsgemäß und zeigen zur Verdeutlichung Gegenstände des Standes der Technik. Figur 1d zeigt ein Sensoraufnahmeelement als Anbauteil 1 zur Aufnahme eines Sensors, welches mit einem Stoßfänger als Bauteil 2 mit dem torsionalen Ultraschallschweißverfahren verschweißt werden soll. Das Sensoraufnahmeelement bzw. Anbauteil 1 ist hier das obere Teil und der Stoßfänger als Bauteil 2 das untere Teil. Beim Schweißvorgang wird eine zylinderförmige Torsionssonotrode (nicht gezeigt) auf die Ankopplungsfläche 10 aufgesetzt. Die Schwingungen der Torsionssonotrode werden dadurch über die Ankopplungsfläche 10 auf das Sensoraufnahmeelement übertragen und durch das Sensoraufnahmeelement auf das untere Teil, den Stoßfänger übertragen und verschweißen so das obere Teil mit dem unteren Teil. Das obere und das untere Teil sind Kunststoffteile.

In den Figuren 1a, 1b, 1c, 1e, 1f, 1g, 1h ist in verschiedenen Ausführungsformen der Schweißbereich 11 auf der Unterseite des Anbauteils 1 gezeigt, d.h. des Teils, welches auf dem Bauteil 2 (siehe auch Figur 5) aufsitzt. Figur 1 a zeigt zwei ringförmige Auskragungen 12, die jeweils einen Ring 4 bilden, die koaxial zueinander auf dem Schweißbereich 11 des Anbauteils 1 angeordnet sind. In dieser Ausführungsform sind die Ringe 4 im Querschnitt rechteckig ausgebildet und haben eine Spitze. Die Ringe 4 sitzen beim Schweißvorgang auf der Schweißfläche 3 auf dem Bauteil 2 auf und grenzen einen Schweißraum 7 ein. Figur 1 b zeigt ebenfalls zwei Ringe 4, die im Querschnitt jedoch dreiecksförmig ausgebildet sind und ebenfalls einen Schweißraum 7 eingrenzen. Der Schweißraum 7 dient beim Schweißvorgang als Reservoir oder Speicherraum für die Schmelze. Zwischen den Ringen 4 treffen sich die zwei Schmelzeströme, die durch das Aufschmelzen der beiden Ringe 4 erzeugt werden und können so nicht weggedrückt werden.

Figur 1c zeigt zwei koaxiale Ringe 4, die im Querschnitt als gegeneinander gestellte Pyramiden ausgebildet sind. Diese bilden drei Schweißräume 7. Figur 1e zeigt auf dem Schweißbereich 11 auf der Unterseite des Anbauteils 1 drei ringförmige Rippen oder Ringe 4 als Auskragungen, die koaxial zueinander angeordnet sind. Hierdurch sind zwei Auffangräume, Speicherräume oder Schweißräume 7 gebildet zur Aufnahme der Schmelzeströme. Figur 1f zeigt zwei Ringe 4, die im Querschnitt über eine Kurve ineinander übergehen. Hier ist zwischen den Ringen 4 auch ein Auffangraum angeordnet. Figur 1 g zeigt eine im Schnitt rechteckförmige Rippe als Ring 4 und Figur 1h den Stand der Technik.

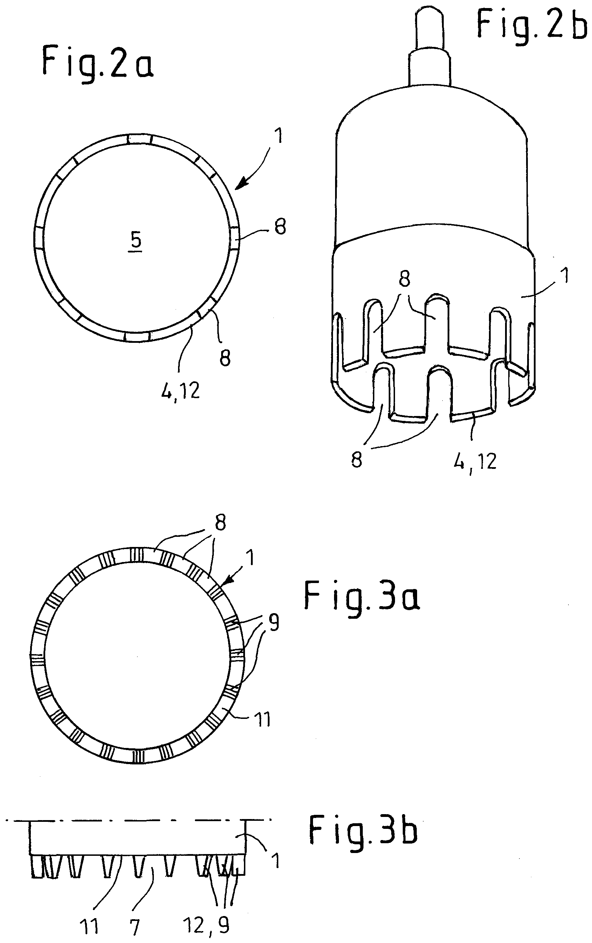

Die in den Figuren 2a, 2b, 3a, 3b, 4a und 4b dargestellten Gegenstände sind nicht erfindungsgemäß und zeigen zur Verdeutlichung Gegenstände des Standes der Technik. Figur 2a, b zeigen eine vereinfachte Ansicht vom Stoßfänger als Bauteil 2 aus gesehen auf den Schweißbereich 11 des Anbauteils 1, d.h. eines Sensoraufnahmeelements mit nur einer umlaufenden erhabenen Auskragung 12 als Ring 4. Erfindungsgemäß ist in einer erfinderischen Ausgestaltung der umlaufende Ring 4 radial am Durchmesser unterbrochen.

Die Unterbrechungen sind mit dem Bezugszeichen 8 gekennzeichnet. Im Prinzip bildet der Ring 4 oder die umlaufende Rippe einen Art Kronenbohrer, wie er in Figur 2b gezeigt ist, um zum einen Platz für das Schweißgut bzw. die Schmelze zu schaffen und zum anderen eine Art Sägeeffekt für das Durchdringen möglicher Verschmutzungen bzw. das leichte"Eingraben" in die eigentliche Bauteiloberfläche zu verbessern.

Figur 3a zeigt eine vereinfachte Ansicht von unten auf das Sensoraufnahmeelement als Anbauteil 1 mit radialen Rippen 9, die auch als Schweißrippen bezeichnet werden können. Figur 3b zeigt trapezförmige Schweißrippen 9. Figur 4a, b zeigen eine vereinfachte Ansicht von unten auf das Sensoraufnahmeelement mit Schweißnoppen 13 anstatt Schweißrippen.

## Patentansprüche

1. Verfahren zum Verschweißen eines Sensoraufnahmeelements (1) mit einem Stoßfänger (2), wobei sowohl das Sensoraufnahmeelement (1) als auch der Stoßfänger (2) Kunststoffteile für ein Kraftfahrzeug sind, mit dem an sich bekannten torsionalen Ultraschallschweißverfahren mit einer zylinderförmigen Torsionssonotrode zur Übertragung der den Schweißvorgang erzeugenden Schwingungen auf das zu verschweißende Sensoraufnahmeelement (1), wobei das Sensoraufnahmeelement (1) mit einer Ankopplungsfläche (10) zur Ankopplung der Schwingungen der zylinderförmigen Torsionssonotrode versehen wird und das Sensoraufnahmeelement (1) auf dem zur Schweißfläche (3) auf dem Stoßfänger (2) gewandten ringförmigen Schweißbereich (11) mit Kopplungselementen zur Ankopplung der von der zylinderförmigen Torsionssonotrode induzierten Schwingungen versehen wird und dadurch beim Schweißvorgang die Kopplungselemente schmelzen und so das Sensoraufnahmeelement (1) mit dem Stoßfänger (2) verschweißen, **wobei** als Kopplungselemente sich im Wesentlichen senkrecht zum Schweißbereich (11) erstreckende Auskragungen (12) verwendet werden, die so angeordnet werden, dass die Schmelze im Wesentlichen auf der Schweißfläche (3) bleibt, und wobei die Auskragungen (12) zwei koaxial angeordnete Ringe (4) sind, die den ringförmigen Schweißbereich (11) eingrenzen.

2. Verfahren nach Anspruch 1, **dadurch gekennzeichnet, dass** die Schmelze unter benachbarte Auskragungen (12) gelenkt oder zwei parallel entstehende Schmelzflüsse gegeneinander gelenkt werden.

3. Anbauteil (1) aus Kunststoff mit zumindest einem für eine Verschweißung mit einem Stoßfänger (2) aus Kunststoff vorgesehenen ringförmigen Schweißbereich (11), wobei die Verschweißung mit dem an sich bekannten torsionalen Ultraschallschweißverfahren erfolgen soll mit einer zylinderförmigen Torsionssonotrode zur Übertragung der den Schweißvorgang erzeugenden Schwingungen auf das zu verschweißende Anbauteil (1), wobei das Anbauteil (1) eine Ankopplungsfläche (10) zur Ankopplung der Schwingungen der zylinderförmigen Torsionssonotrode aufweist und das Anbauteil (1) auf seinem zur vorgesehenen Schweißfläche (3) auf dem Stoßfänger (2) gewandten Schweißbereich (11) mit Kopplungselementen zur Ankopplung der von der zylinderförmigen Torsionssonotrode induzierten Schwingungen versehen ist, die beim Schweißvorgang schmelzen und so das Anbauteil (1) mit dem Stoßfänger (2) verschweißen, zur Verwendung für ein Verfahren nach Anspruch 1 oder 2, wobei die Kopplungselemente im Wesentlichen senkrecht zum Schweißbereich sich erstreckende Auskragungen (12) sind, **dadurch gekennzeichnet, dass** das Anbauteil ein Sensoraufnahmeelement für ein Kraftfahrzeug ist, und die Auskragungen (12) zwei koaxial angeordnete Ringe (4) sind, die den ringförmigen Schweißbereich (11) eingrenzen.

4. Anbauteil nach Anspruch 3, **dadurch gekennzeichnet, dass** die Auskragungen (12) Rippen oder Noppen sind.

5. Anbauteil nach Anspruch 3 oder 4, **dadurch gekennzeichnet, dass** die Auskragungen (12) eine erhabene Kette mit Unterbrechungen bilden.

6. Anbauteil nach einem der Ansprüche 3 bis 5, **dadurch gekennzeichnet, dass** die Ringe (4) radial am Durchmesser unterbrochen sind.

7. Anbauteil nach einem der Ansprüche 3 bis 6, **dadurch gekennzeichnet, dass** die Auskragungen (12) im Querschnitt dreieckförmig, M-förmig, keilförmig, trapezförmig oder wellenförmig ausgebildet sind.

## Claims

1. Method for welding a sensor housing element (1) to a bumper (2), both the sensor housing element (1) and the bumper (2) being plastics parts for a motor vehicle, which method comprises the per se known torsional ultrasonic welding method using a cylindrical torsion sonotrode for transmitting the vibrations producing the welding action to the sensor housing element (1) to be welded, the sensor housing element (1) being provided with a coupling surface (10) for coupling the vibrations of the cylindrical torsion sonotrode, and the sensor housing element (1) being provided, on the annular welding region (11) facing the welding surface (3) on the bumper (2), with coupling elements for coupling the vibrations induced by the cylindrical torsion sonotrode, and the coupling elements therefore melting during the welding action and thus welding the sensor housing element (1) to the bumper (2), wherein projections (12) extending substantially perpendicularly to the welding region (11) are used as the coupling elements and are arranged such that the melt remains substantially on the welding surface (3), and the projections (12) being two coaxial rings (4) that enclose the annular welding region (11).

2. Method according to claim 1, **characterised in that** the melt is directed beneath adjacent projections (12) or two melts flowing in parallel are directed against one another.

3. Attachment (1) made of plastics material, comprising at one least annular welding region (11) provided for welding to a bumper (2) made of plastics material, it being intended for the welding to be carried out by means of the per se known torsional ultrasonic welding method using a cylindrical torsion sonotrode for transmitting the vibrations producing the welding action to the attachment (1) to be welded, the attachment (1) comprising a coupling surface (10) for coupling the vibrations of the cylindrical torsion sonotrode, and the attachment (1) being provided, on the welding region (11) thereof facing the provided welding surface (3) on the bumper (2), with coupling elements for coupling the vibrations induced by the cylindrical torsion sonotrode, which elements melt during the welding action and thus weld the attachment (1) to the bumper (2), which attachment is for use in a method according to either claim 1 or claim 2, the coupling elements being projections (12) extending substantially perpendicularly to the welding region, **characterised in that** the attachment is a sensor housing element for a motor vehicle, and the projections (12) are two coaxial rings (4) that enclose the annular welding region (11).

4. Attachment according to claim 3, **characterised in that** the projections (12) are ribs or knobs.

5. Attachment according to either claim 3 or claim 4, **characterised in that** the projections (12) form a raised chain having gaps.

6. Attachment according to any of claims 3 to 5, **characterised in that** the rings (4) are provided with gaps radially on the diameter thereof.

7. Attachment according to any of claims 3 to 6, **characterised in that** the projections (12) are triangular, M-shaped, wedge-shaped, trapezoidal or undulating in cross section.

## Revendications

1. Procédé de soudage d'un élément de logement de capteur (1) à un pare-chocs (2), à la fois l'élément de logement de capteur (1) et le pare-chocs (2) étant des pièces en matière plastique pour un véhicule automobile, au moyen du procédé connu en soi de soudage par ultrasons en torsion à l'aide d'une sonotrode à torsion cylindrique servant à transmettre les vibrations produisant l'opération de soudage à l'élément de logement de capteur (1) à souder, l'élément de logement de capteur (1) étant doté d'une surface de couplage (10) permettant de coupler les vibrations de la sonotrode à torsion cylindrique, et l'élément de logement de capteur (1) étant doté, sur la zone de soudage (11) annulaire tournée vers la surface de soudage (3) sur le pare-chocs (2), d'éléments de couplage permettant de coupler les vibrations induites par la sonotrode à torsion cylindrique et, par conséquent, les éléments de couplage fondant lors de l'opération de soudage et soudant ainsi l'élément de logement de capteur (1) au pare-chocs (2), des saillies (12) s'étendant sensiblement perpendiculairement à la zone de soudage (11) étant utilisées en tant qu'éléments de couplage, lesquelles saillies sont disposées de telle sorte que la masse fondue reste sensiblement sur la surface de soudage (3), et les saillies (12) étant deux anneaux (4) disposés de manière coaxiale qui délimitent la zone de soudage (11) annulaire.

2. Procédé selon la revendication 1, **caractérisé en ce que** la masse fondue est dirigée en dessous de saillies (12) adjacentes ou deux flux de masse fondue se formant parallèlement sont dirigés l'un vers l'autre.

3. Pièce rapportée (1) en matière plastique comprenant au moins une zone de soudage (11) annulaire prévue pour un soudage à un pare-chocs (2) constitué de matière plastique, le soudage devant s'effectuer au moyen du procédé connu en soi de soudage par ultrasons en torsion à l'aide d'une sonotrode à torsion cylindrique servant à transmettre les vibrations produisant l'opération de soudage à la pièce rapportée (1) à souder, la pièce rapportée (1) comprenant une surface de couplage (10) permettant de coupler les vibrations de la sonotrode à torsion cylindrique et la pièce rapportée (1) étant dotée, sur sa zone de soudage (11) tournée vers la surface de soudage (3) prévue sur le pare-chocs (2), d'éléments de couplage permettant de coupler les vibrations induites par la sonotrode à torsion cylindrique, lesquels éléments de couplage fondent lors de l'opération de soudage et soudent ainsi la pièce rapportée (1) au pare-chocs (2), à utiliser pour un procédé selon la revendication 1 ou 2, les éléments de couplage étant des saillies (12) s'étendant sensiblement perpendiculairement à la zone de soudage, **caractérisée en ce que** la pièce rapportée est un élément de logement de capteur pour un véhicule automobile, et les saillies (12) sont deux anneaux (4) disposés de manière coaxiale qui délimitent la zone de soudage (11) annulaire.

4. Pièce rapportée selon la revendication 3, **caractérisée en ce que** les saillies (12) sont des nervures ou des protubérances.

5. Pièce rapportée selon la revendication 3 ou 4, **caractérisée en ce que** les saillies (12) forment une chaîne en relief dotée d'interruptions.

6. Pièce rapportée selon l'une quelconque des revendications 3 à 5, **caractérisée en ce que** les anneaux (4) sont interrompus radialement au niveau du diamètre.

7. Pièce rapportée selon l'une quelconque des revendications 3 à 6, **caractérisée en ce que** les saillies (12) sont réalisées de manière triangulaire, en forme de M, en coin, de manière trapézoïdale ou de manière ondulée en section transversale.
